# EUROPÄISCHE PATENTSCHRIFT

(11) **EP 1 779 019 B1**
(45) Veröffentlichungstag und Bekanntmachung des Hinweises auf die Patenterteilung: **30.07.2008**
(21) Anmeldenummer: 04822239.2
(22) Anmeldetag: 18.11.2004
(51) Int. Cl.: F16L 37/14

(54) **KUPPLUNG**
COUPLING
DISPOSITIF D'ACCOUPLEMENT

(30) Priorität: 11.08.2004 DE 102004038913
(43) Veröffentlichungstag der Anmeldung: 02.05.2007
(73) Patentinhaber: A. Raymond et Cie., 38000 Grenoble (FR)
(72) Erfinder: FEGER, Axel, 79540 Lörrach (DE); TREDE, Michael, F-68440 Habsheim (FR)
(74) Vertreter: Rüttgers, Joachim
(86) Internationale Anmeldenummer: PCT/EP2004/013062
(87) Internationale Veröffentlichungsnummer: WO 2006/018037

(56) Entgegenhaltungen:
- DE-C1- 19 946 260
- US-A1- 2003 052 484
- US-A1- 2004 075 274

## Beschreibung

Die Erfindung betrifft eine Kupplung gemäß dem Oberbegriff des Patentanspruches 1.

Eine derartige Kupplung ist aus der DE 199 46 260 C1 bekannt, Die vorbekannte Kupplung verfügt über ein Aufnahmeteil zum Aufnehmen eines mit einem Rückhaltering ausgebildeten Einsteckteiles. Weiterhin ist ein Sicherungsteil vorhanden, das zwei Arme und einen Rückhalteabschnitt aufweist, wobei das Sicherungsteil in einen Aufnahmeraum des Aufnahmeteiles einfügbar und rechtwinklig zu einer Einsteckrichtung des Einsteckteiles zwischen einer ausgefahrenen Stellung und einer eingeschobenen Stellung bewegbar ist. Dadurch ist das Einsteckteil bei Anordnen des Sicherungsteiles in der eingeschobenen Stellung über Hintergreifen des Rückhalteringes durch den Rückhalteabschnitt gegen unbeabsichtigtes Herausrutschen aus dem Aufnahmeteil gesichert. Allerdings ist es möglich, dass sich das Sicherungsteil in der eingeschobenen Stellung befindet, ohne dass das Einsteckteil ordnungsgemäß gesichert ist.

Der Erfindung liegt die Aufgabe zugrunde, eine Kupplung der eingangs genannten Art anzugeben, die sich durch eine hohe Montagesicherheit auszeichnet.

Diese Aufgabe wird bei einer Kupplung der eingangs genannten Art erfindungsgemäß mit den kennzeichnenden Merkmalen des Patentanspruches 1 gelöst.

Dadurch, dass bei der efindungsgemäßen Kupplung bei Einstecken eines Einsteckteiles das Sicherungsteil durch das Zusammenwirken der Ausfahrschräge und des Rückhalteringes eines Einsteckteiles das Sicherungsteil von der eingeschobenen Stellung in die ausgefahrene Stellung bewegt und bei ordnungsgemäßer Anordnung des Einsteckteiles in der erfindungsgemäßen Kupplung das Sicherungsteil durch die Rückzugsanordnung in eine Vorverrastungsstellung überführt wird, in der zum Sichern des Einsteckteiles vor Überführen des Sicherungsteiles in die eingeschobene Stellung die Vorsicherungsanordnung den Rückhaltering hintergreift, ansonsten jedoch das Einsteckteil bei Überführen des Sicherungsteiles von der ausgefahrenden Stellung in die eingeschobene Stellung durch Einwirken der Ausfahrschräge auf den Rückhaltering wieder ausgetrieben wird, ist eine zuverlässige Montage erzielt, die insbesondere bei Fließbandarbeiten mit zeitlich eng getakteter Verbindung von erfindungsgemäßen Kupplungen mit Einsteckteilen von großer Bedeutung ist.

Weitere zweckmäßige Ausgestaltungen der Erfindung sind Gegenstand der Unteransprüche.

Aus der nachfolgenden Beschreibung eines bevorzugten Ausführungsbeispiels der Erfindung unter Bezug auf die Figuren der Zeichnung ergeben sich weitere zweckmäßige Ausgestaltungen und Vorteile. Es zeigen:
- Fig. 1: in einer teilgeschnittenen perspektivischen Ansicht ein Ausführungsbeispiel einer erfindungsgemäßen Kupplung mit einem Aufnahmeteil und einem sich in einer eingeschobenen Stellung befindlichen Sicherungsteil sowie ein in die erfindungsgemäße Kupplung einzufügendes Einsteckteil,
- Fig. 2: in einer teilgeschnittenen perspektivischen Ansicht das Ausführungsbeispiel gemäß Fig. 1 mit einem in die erfindungsgemäße Kupplung eingesteckten Einsteckteil mit dem Sicherungsteil in einer Vorverrastungsstellung,
- Fig. 3: in einem Querschnitt im Bereich einer Vorsicherungsanordnung das Ausführungsbeispiel gemäß Fig. 1. in der Anordnung gemäß Fig. 2,
- Fig. 4: in einer teilgeschnittenen perspektivischen Ansicht das Ausführungsbeispiel gemäß Fig. 1 mit einem in das Aufnahmeteil eingesteckten Einsteckteil und dem Sicherungsteil in einer eingeschobenen Stellung und
- Fig. 5: in einem Querschnitt das Ausführungsbeispiel gemäß Fig. 1 in der Anordnung gemäß Fig. 4.

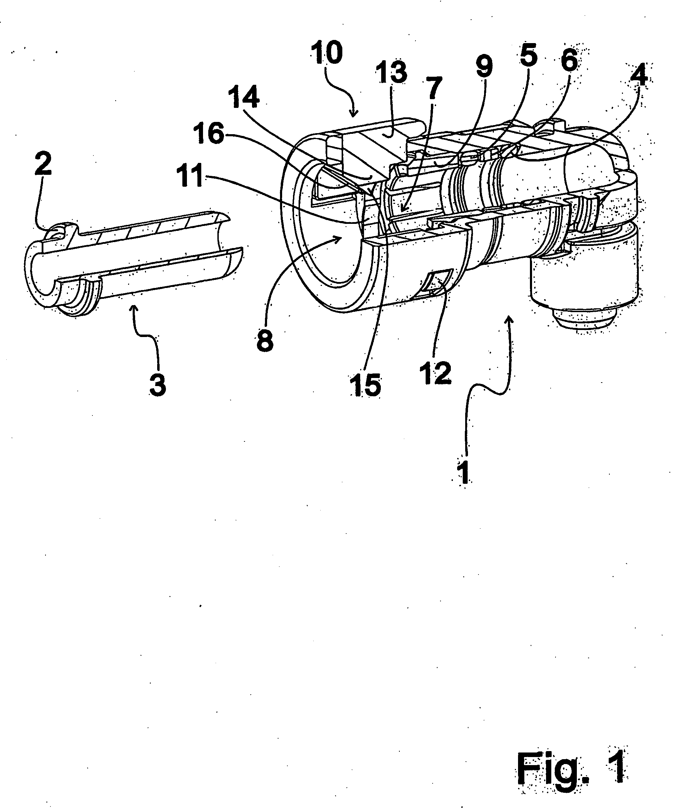

Fig. 1 zeigt in einer teilgeschnittenen perspektivischen Ansicht ein Ausführungsbeispiel einer erfindungsgemäßen Kupplung. Die Kupplung gemäß Fig. 1 verfügt über ein Aufnahmeteil 1, das mit einem in Fig. 1 nicht dargestellten Ende einer Leitung eines Fluidleitungssystems verbindbar ist. Zum abgedichteten Verbinden der erfindungsgemäßen Kupplung mit einem mit einem Rückhaltering 2 ausgebildeten Einsteckteiles 3 sind ein erster Dichtungsring 4, ein zweiter Dichtungsring 5 und ein zwischen den Dichtungsringen 4, 5 angeordneter Zwischenring 6 in einem Aufnahmeraum 7 des Aufnahmeteiles 1 vorhanden. Ein auf der einer Einsteckseite 8 zugewandten Seite des zweiten Dichtungsringes 5 benachbart angeordneter Distanzring 9 dient dem Halten der Distanzringe 4, 5 und des Zwischenringes 6 zwischen dem der. Einsteckseite 8 abgewandten Seite des Aufnahmeraumes 7 und einem, Sicherungsteil 10 der erfindungsgemäßen Kupplung.

Das Sicherungsteil 10 ist in dem Aufnahmeteil 1 zwischen einer in Fig 1. dargestellten eingeschobenen Stellung sowie einer ausgefahrenen Stellung verschiebbar und weist einen ersten Arm 11 sowie einen zweiten Arm 12 auf, die einander gegenüberliegend angeordnet sind und mit einem innenseitigen Abschnitt in den Aufnahmeraum 7 hineinragen. Weiterhin ist an einem sich zwischen den Armen 11, 12 erstreckenden Querabschnitt 13 ein Rückhalteabschnitt 14 ausgebildet, der, wie zweiter unten näher erläutert, bei einem ordnungsgemäß eingesteckten Einsteckteil 3 in einer vollständig eingeschobenen Stellung des Sicherungsteiles 10 sowie in einer ordnungsgemäß eingesteckten Anordnung des Einsteckteiles 3 den Rückhaltering 2 hintergreift. Weiterhin ist Fig. 1 zu entnehmen, dass an dem Sicherungsteil 10 ein in den Aufnahmeraum 7 hineinragender Vorsprung 15 einer Vorsicherungsanordnung mit einer in Richtung der Einsteckseite 8 entgegen einer Einsteckrichtung des Einsteckteiles 3 radial nach außen ansteigenden Ausfahrschräge 16 ausgebildet ist.

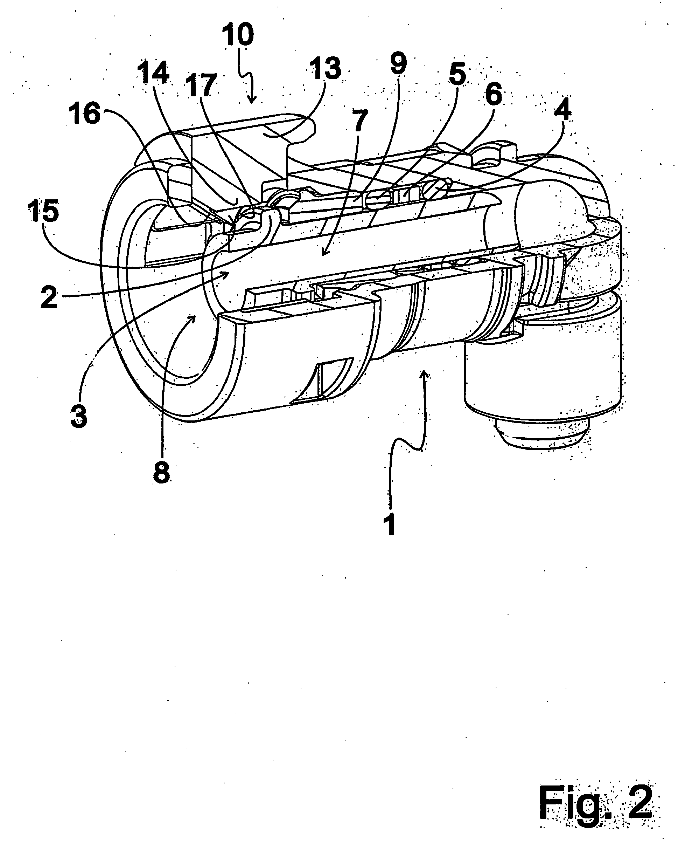

Fig. 2 zeigt in einer teilgeschnittenen perspektivischen Ansicht das Ausführungsbeispiel gemäß Fig. 1 mit dem in die erfindungsgemäße Kupplung eingesteckten Einsteckteil 3 mit dem Sicherungsteil 10 in einer über die ausgefahrene Stellung eingenommene Vorverrastungsstellung. Die Vorverrastungsstellung ist dadurch erreicht worden, dass sich während des Einsteckvorganges der Rückhaltering 2 bei Auftreffen auf die in Einsteckrichtung radial nach innen zulaufende Ausfahrschräge 16 das Sicherungsteil 10 rechtwinklig zu der Einsteckrichtung radial nach außen in eine ausgefahrene Stellung bewegt, bis der Rückhaltering 2 den Vorsprung 15 passiert hat und sich das Sicherungsteil 10 in der Vorverrastungsstellung befindet. Weiterhin ist Fig. 2 zu entnehmen, dass der Vorsprung 15 auf der der Ausfahrschräge 16 gegenüberliegenden, in Einsteckrichtung des Einsteckteiles 3 rückseitigen Seite eine Eintreibschräge 17 aufweist, die in Einsteckrichtung radial nach außen ansteigt.

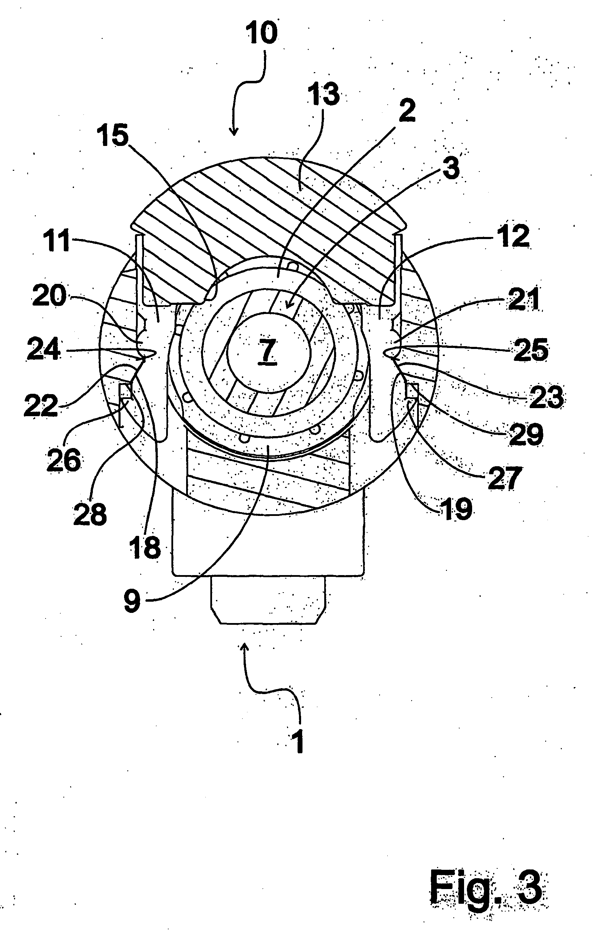

Fig. 3 zeigt in einem Querschnitt im Bereich des Vorsprunges 15 der Vorsicherungsanordnung das Ausführungsbeispiel gemäß Fig. 1 in der Anordnung gemäß Fig. 2 mit Blick auf den in Einsteckrichtung hinteren Teil des Aufnahmeraumes 7. Fig. 3 ist zu entnehmen, dass der Vorsprung 15 in der Vorverrastungsstellung den Rückhaltering 2 hintergreift und dadurch das Einsteckteil 3 in der Vorverrastungsstellung gegen unbeabsichtigtes Herausziehen aus dem Aufnahmeteil 1 sichert.

Weiterhin ist aus Fig. 3 ersichtlich, dass an den radialen Außenseiten der Arme 11, 12 jeweils eine Rückzugsschräge 18, 19 einer Rückzugsanordnung sowie ein Raststufenvorsprung 20, 21 vorhanden sind, die mit an dem Aufnahmeteil 1 ausgebildeten und jeweils mit einer zugeordneten Rückzugsschräge 18, 19 gegenüberliegenden Gegenschrägen 22, 23 der Rückzugsanordnung beziehungsweise mit an dem Aufnahmeteil 1 ausgebildeten Rastvorspruüngen 24, 25 zusammenwirken, um das Sicherungsteil 10 zum einen durch Erzeugen einer einer zum Überführen des Sicherungsteiles 10 von der Vorverrastungsstellung in die ausgefahrene Stellung einwirkenden Auszugskraft entgegenwirkenden Kraft und zum anderen einer radial nach innen wirkenden Kraft zum Überführen des Sicherungsteiles von der Vorverrastungsstellung in die eingeschobene Stellung entgegenwirkend in der Vorverrastungsstellung zu halten.

An jedem Arm 11, 12 ist weiterhin jeweils eine radial nach außen vorstehende Sicherungsnase 26, 27 ausgebildet, die in der in Fig. 3 dargestellten Vorverrastungsstellung in einem gewissen Abstand von an dem Aufnahmeteil 1 ausgebildeten Sicherungsabsätzen 28, 29 angeordnet sind. In der vollständig ausgefahrenen Stellung des Sicherungsteiles 10 schlagen die Sicherungsnasen 26, 27 an den Sicherungsabsätzen 28, 29 an und verhindern bei nicht auf die Arme 11, 12 radial nach innen einwindenden Kräften zum bewussten Entnehmen des Sicherungsteiles 10 aus dem Aufnahmeteil 1, dass das Sicherungsteil 10 beim Entfernen des Einsteckteiles 3 aus dem Aufnahmeteil 1 gelöst wird.

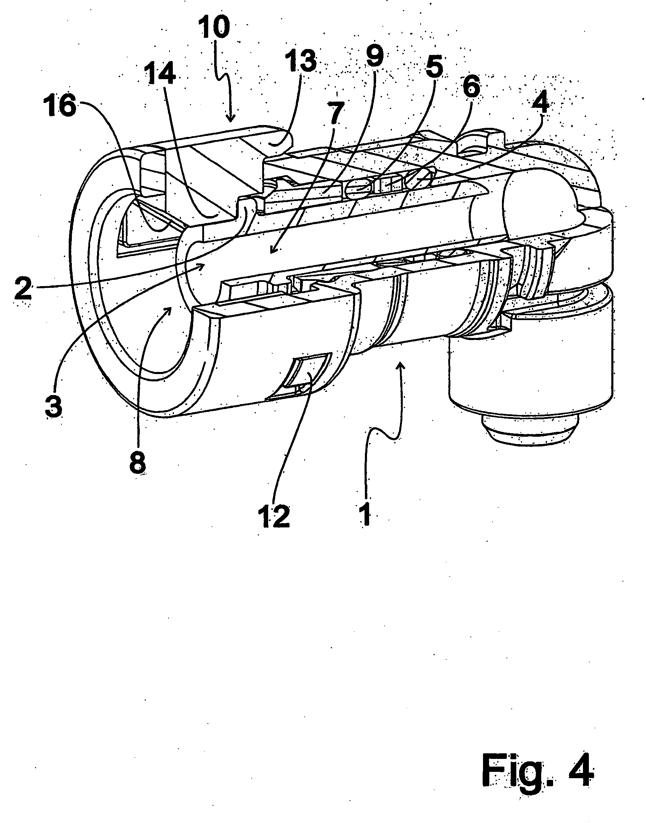

Fig. 4 zeigt in einer teilgeschnittenen perspektivischen Ansicht das Ausführungsbeispiel gemäß Fig. 1 mit einem zum dichten Verbinden der erfindungsgemäßen Kupplung und dem Einsteckteil 3 ordnungsgemäß in das Aufnahmeteil 1 eingesteckten Einsteckteil 3 und mit dem Sicherungsteil 10 in der eingeschobenen Stellung. Beim Überführen des Sicherungsteiles 10 von der Vorverrastungsstellung in die eingeschobene Stellung wird durch Einwirken der in der Darstellung gemäß Fig. 4 nicht sichtbaren Eintreibschrägen 17 auf den Rückhaltering 2 das Einsteckteil 3 in Einsteckrichtung so weit in den Aufnahmeraum 3 getrieben, bis der Rückhalteabschnitt 14 den Rückhaltering 2 hintergreift.

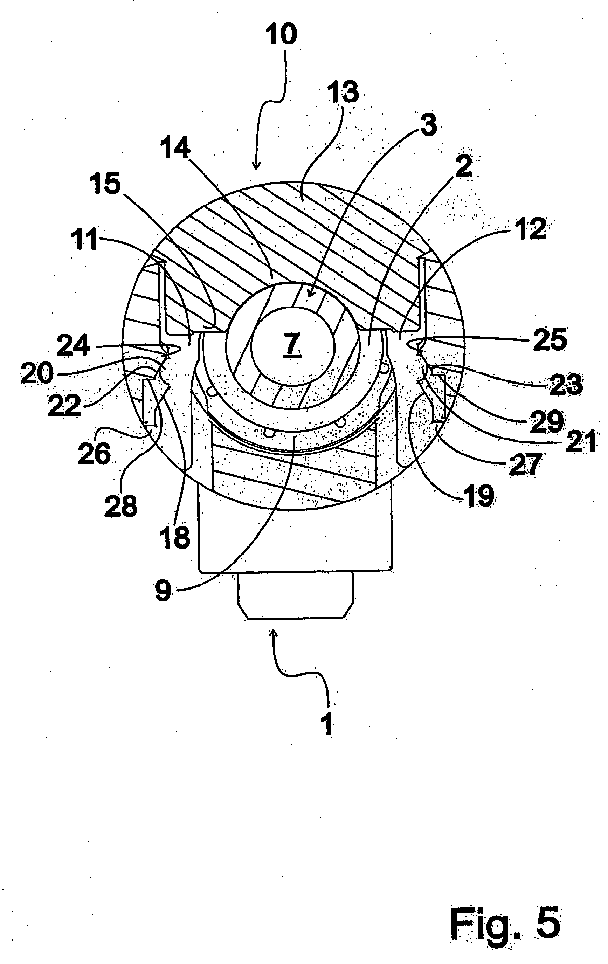

Fig. 5 zeigt in einem Querschnitt das Ausführungsbeispiel gemäß Fig. 1 in der Anordnung gemäß Fig. 4. Aus Fig. 5 ist ersichtlich, dass die an dem Sicherungsteil 10 ausgebildeten Raststufenvorsprünge 20, 21 in Einführrichtung des Sicherungsteiles 10 gegenüber der Anordnung gemäß Fig. 3 nunmehr auf der anderen Seite der Rastvorsprünge 24, 25 liegen und das Sicherungsteil 10 gegen unbeabsichtigtes Überführen von der eingeschobenen Stellung in die Vorverrastungsstellung sichern.

## Patentansprüche

1. Kupplung mit einem Aufnahmeteil (1) zum Aufnehmen eines mit einem Rückhaltering (2) ausgebildeten Einsteckteiles (3) und mit einem Sicherungsteil (10), das zwei Arme (11, 12) und einen Rückhalteabschnitt (14) aufweist, wobei das Sicherungsteil (10) in einen Aufnahmeraum (7) des Aufnahmeteiles (1) einfügbar und rechtwinklig zu einer Eihsteckrichtung des Einsteckteiles (3) zwischen einer ausgefahrenen Stellung und einer eingeschobenen Stellung bewegbar ist, **dadurch gekennzeichnet, dass** an dem Sicherungsteil (10) eine Ausfahrschräge (16) ausgebildet ist, die mit dem Rückhaltering (2) eines Einsteckteiles (3) derart zusammenwirkt, dass das Sicherungsteil (10) von der eingeschobenen Stellung in die ausgefahrene Stellung bewegbar ist, und dass eine Vorsicherungsanordnung (15) sowie eine Rückzugsanordnung (18, 19, 22, 23) vorhanden sind, die derart zusammenwirken, dass bei Einführen des Rüchhalteringes (2) in Einführrichtung hinter die Ausfahrschräge (16) die Vorsicherungsanordnung (15) den Rückhaltering (2) hintergreift und die Rückzugsanordnung (18, 19, 22, 23) das Sicherungsteil (10) in eine zwischen der eingeschobenen Stellung und der ausgefahrenen Stellung liegende Vorverrastungstellung überführt.

2. Kupplung nach Anspruch 1, **dadurch gekennzeichnet, dass** die die Vorsicherungsanordnung ein in den Aufnahmeraum (7) hineinragender Vorsprung (15) ist und dass die Ausfahrschräge (16) an dem Vorsprung (15) ausgebildet ist.

3. Kupplung nach Anspruch 1 oder Anspruch 2, **dadurch gekennzeichnet, dass** die Rückzugsanordnung eine an dem Sicherungsteil (10) ausgebildete Rückzugsschräge (18, 19) und eine an dem Aufnahmeteil (1) ausgebildete Gegenschräge (22, 23) aufweist, die zum Erzeugen einer einer Bewegung des Sicherungsteiles (10) von der Vorverrastungstellung in die ausgefahrene Stellung gegengerichteten Kraft zusammenwirken.

4. Kupplung nach einem der Ansprüche 1 bis 3, **dadurch gekennzeichnet, dass** das Sicherungsteil (10) einen Raststufenvorsprung (20, 21) aufweist und dass das Aufnahmeteil (1) mit einem Rastvorsprung (24, 25) ausgebildet ist, wobei der Raststufenvorsprung (20, 21) in der Vorverrastungsstellung und in der eingeschobenen Stellung jeweils auf einer Seite des Rastvorsprunges (24, 25) sowie an diesem anliegend angeordnet ist.

## Claims

1. Coupling comprising a receiving part (1) for receiving an inserted part (3) formed with a retaining ring (2), and comprising a securing part (10) which has two arms (11, 12) and a retaining section (14), the securing part (10) being insertable into a receptacle space (7) of the receiving part (1) and being moveable at right angles to a direction of insertion of the inserted part (3) between a withdrawn position and a pushed-in position, **characterized in that** a withdrawing bevel (16) which cooperates with the retaining ring (2) of an inserted part (3) in such a way that the securing part (10) is moveable from the pushed-in position into the withdrawn position is formed on the securing part (10), and **in that** a pre-securing arrangement (15) and a retraction arrangement (18, 19, 22, 23) are present, which cooperate in such a way that, on introduction of the retaining ring (2) in the direction of introduction behind the withdrawing bevel (16), the pre-securing arrangement (15) grips behind the retaining ring (2), and the retraction arrangement (18, 19, 22, 23) transfers the securing part (10) into a pre-locking position located between the pushed-in position and the withdrawn position.

2. Coupling according to Claim 1, **characterized in that** the pre-securing arrangement is a projection (15) projecting into the receptacle space (7), and **in that** the withdrawing bevel (16) is formed on the projection (15).

3. Coupling according to Claim 1 or Claim 2, **characterized in that** the retraction arrangement has a retraction bevel (18, 19) formed on the securing part (10) and an opposite bevel (22, 23) formed on the receiving part (1), which cooperate for generating a force opposing a movement of the securing part (10) from the pre-locking position into the withdrawn position.

4. Coupling according to any of Claims 1 to 3, **characterized in that** the securing part (10) has a detent stage projection (20, 21) and **in that** the receiving part (1) is formed with a catch projection (24, 25), the detent stage projection (20, 21) being arranged, in the pre-locking position and in the push-in position, in each case on one side of the catch projection (24, 25) and resting against this.

## Revendications

1. Organe d'accouplement se composant d'un élément formant logement d'emmanchement (1) dans lequel est destiné à venir s'insérer un embout embrochable mâle (3) muni d'une bague de retenue (2), et d'un élément de blocage en position (10), qui comporte deux segments (11, 12) et une portion de retenue (14), l'élément de blocage en position (10) pouvant en l'occurrence être inséré dans la gabarit de réception (7) de l'élément formant logement d'emmanchement (1) et être déplacé, selon une trajectoire en angle droit par rapport au sens de l'emmanchement de l'embout embrochable mâle (3) entre une position de dégagement et une position d'insertion en prise, **caractérisé en ce qu'**il est prévu, sur l'élément de blocage en position (10), une portion inclinée de dégagement (16) qui opère en combinaison avec la bague de retenue (2) de l'embout embrochable mâle (3) de telle manière que l'élément de blocage en position (10) peut être déplacé de sa position d'insertion en prise dans sa position de dégagement, et **en ce qu'**il est prévu un agencement de blocage préalable (15) ainsi qu'un agencement de rappel (18, 19, 22, 23), qui opèrent en combinaison réciproque dans des conditions telles que, lors de la poussée de la bague de retenue (2) dans la direction de son introduction derrière la portion inclinée de dégagement (16), l'agencement de blocage préalable (15) vient cramponner par derrière la bague de retenue (2) et l'agencement de rappel (18, 19, 22, 23) amène l'élément de blocage en position (10) dans une position de mise en prise d'encastrement préalable se situant entre la position d'insertion en prise et la position de dégagement.

2. Organe d'accouplement selon la revendication 1, **caractérisé en ce que** l'agencement de blocage préalable consiste en une protubérance (15) faisant saillie à l'intérieur du gabarit de réception (7) et **en ce que** la portion inclinée de dégagement (16) fait partie intégrante de la protubérance (15).

3. Organe d'accouplement selon la revendication 1 ou la revendication 2, **caractérisé en ce que** l'agencement de rappel se compose d'un plan incliné de rappel (18, 19) défini sur l'élément de blocage en position (10) et d'un plan incliné conjugué (22, 23) défini sur l'élément formant logement d'emmanchement (1), dont l'opération en combinaison réciproque engendre une force qui s'oppose à un déplacement de l'élément de blocage en position (10) de sa position de mise en prise d'encastrement préalable dans sa position de dégagement.

4. Organe d'accouplement selon l'une des revendications 1 à 3, **caractérisé en ce que** l'élément de blocage en position (10) comporte une protubérance définissant un gradin d'accrochage (20, 21) et **en ce que** l'élément formant logement d'emmanchement (1) est muni d'une saillie d'accrochage (24, 25), la protubérance définissant un gradin d'accrochage (20, 21) étant en l'occurrence disposée, dans la position de mise en prise d'encastrement préalable et dans la position d'insertion en prise, respectivement sur un côté de la saillie d'accrochage (24, 25) ainsi qu'en contact de butée contre celle-ci.
